# EUROPÄISCHE PATENTANMELDUNG

(11) **EP 3 226 113 A1**
(43) Veröffentlichungstag der Anmeldung: **04.10.2017**
(21) Anmeldenummer: 17159333.8
(22) Anmeldetag: 06.03.2017
(51) Int. Cl.: G06F 3/041, G01L 1/14, G06F 3/044

(54) **ELEKTROGERÄT MIT EINEM GEHÄUSE MIT EINEM KAPAZITIVEN DRUCKSENSOR UND DRUCKSENSORARRAY**

(30) Priorität: 30.03.2016 DE 102016205163
(71) Anmelder: Robert Bosch GmbH, 70442 Stuttgart (DE)
(72) Erfinder: UTERMOEHLEN, Fabian, 71229 Leonberg (DE)

(57) **Zusammenfassung**

Um ein Elektrogerät mit einem Gehäuse bereitzustellen, wobei das Gehäuse durch Vorsehen eines Sensorbereiches funktionalisiert ist, um dieses berührungsempfindlich zu machen, wird ein Elektrogerät (100) mit einem Gehäuse (11) und einem Sensorbereich für eine Benutzereingabe vorgeschlagen, wobei der Sensorbereich einen kapazitiven Drucksensor (24) zur Messung eines Druckeintrags umfasst und/oder wobei ein kapazitiver Drucksensor (24) zur Messung eines Druckeintrags am Sensorbereich angeordnet ist, und wobei der Sensorbereich an dem Gehäuse (11) angeordnet ist.

## Beschreibung

Die vorliegende Erfindung betrifft ein Elektrogerät mit einem Gehäuse, wobei das Gehäuse einen Sensorbereich für eine Benutzereingabe aufweist. Ferner betrifft die Erfindung ein Drucksensorarray und ein Gehäuse für ein Elektrogerät.

### Stand der Technik

Aus dem Stand der Technik sind kapazitive Touchpads, wie sie zum Beispiel in Notebooks unterhalb der Tastatur integriert werden, bekannt. Prinzipiell bestehen diese meistens aus einem Array aus Kondensatoren, deren Kapazität sich durch eine Änderung der Dielektrizitätskonstante der Umgebung in Folge der Annäherung eines Fingers ändert. Eine Eingabe erfolgt durch eine Berührung des Touchpads durch den Finger. Wenn sich ein anderes Material zwischen Finger und Touchpad befindet ist keine Eingabe mehr möglich. Die Stärke des Druckes durch einen Finger wird hierbei nicht erfasst.

Ferner sind aus dem Stand der Technik Smartphones, Tablets und andere mobile Geräte bekannt, deren Gehäuserückseite keine elektrische Funktion beziehungsweise keine Form der Eingabe ermöglicht und lediglich eine Schutzfunktion bietet.

Aus der DE 10 2010 040 164 A1 ist eine Bedienungstafel zum Erfassen von Nähe und Kraft bekannt, umfassend eine Deckschicht, eine erste Elektrodenschicht, die eine erste Kraftsensorelektrode enthält, eine zweite Kraftsensorelektrode, die in einer zweiten Elektrodenschicht oder auf einer Auflageschicht positioniert ist, und ein dielektrisches Substrat, von dem zumindest ein Abschnitt komprimierbar ist und zwischen der ersten und der zweiten Kraftsensorelektrode positioniert ist.

Aus dem Stand der Technik ist kein Gehäuse eines Elektrogerätes bekannt, welches als, insbesondere sekundäres, Eingabemittel für eine Benutzereingabe dient.

### Offenbarung der Erfindung

Die Erfindung stellt ein Elektrogerät mit einem Gehäuse bereit, wobei das Gehäuse durch Vorsehen eines Sensorbereiches funktionalisiert ist, um dieses berührungsempfindlich zu machen.

Das erfindungsgemäße Elektrogerät weist ein Gehäuse und einen Sensorbereich für eine Benutzereingabe auf, wobei der Sensorbereich einen kapazitiven Drucksensor zur Messung eines Druckeintrags umfasst und/oder wobei ein kapazitiver Drucksensor zur Messung eines Druckeintrags am Sensorbereich angeordnet ist, und wobei der Sensorbereich an dem Gehäuse angeordnet ist.

Durch das Vorsehen eines Sensorbereiches für eine Benutzereingabe an einem Gehäuse eines Elektrogerätes wird eine Funktionalisierung des Gehäuses, von zum Beispiel einem Smartphone, erzielt, um dieses berührungsempfindlich zu machen. Es können Stärke und/oder Ort des Druckeintrags gemessen werden. Vorteilhafterweise können dabei die Möglichkeiten zur Bedienung des Elektrogerätes, beispielsweise eines Mobiltelefons, eines Smartphones, eines Laptops oder eines Notebooks, erweitert werden. Ist das Elektrogerät beispielsweise ein Mobiltelefon oder ein Smartphone, so kann ein Smartphone-Benutzer beispielsweise einen Anruf ablehnen, ohne das Gerät aus der Hosentasche zu nehmen, indem er auf den Sensorbereich des Gehäuses des Smartphones einen Druck ausübt. Hierfür muss insbesondere der Smartphone-Benutzer nicht auf das Display beziehungsweise die Anzeigevorrichtung des Smartphones schauen, um das dem Ablehnen des Anrufes zugeordnete Bedienfeld zu finden. Vielmehr reicht eine im Wesentlichen ohne Hinsehen beziehungsweise blind durchgeführte Druckausübung auf das Gehäuse des Smartphones.

Ferner ist es bevorzugt vorgesehen, dass der Sensorbereich für eine Benutzereingabe ein sekundärer Sensorbereich für eine Benutzereingabe ist. Bevorzugt weist das Elektrogerät einen primären Sensorbereich und einen sekundären Sensorbereich auf, wobei der sekundäre Sensorbereich einen kapazitiven Drucksensor zur Messung eines Druckeintrags umfasst und/oder wobei ein kapazitiver Drucksensor zur Messung eines Druckeintrags am sekundären Sensorbereich angeordnet ist.

So besitzen aus dem Stand der Technik bekannte Notebooks kapazitive Touchpads, während aus dem Stand der Technik bekannte Smartphones oder Mobiltelefone annäherungsempfindliche Anzeigevorrichtungen wie Displays besitzen. Bevorzugt ist der Sensorbereich für eine Benutzereingabe ein sekundärer Sensorbereich, während der primäre Sensorbereich des Elektrogerätes durch ein Touchpad, beispielsweise eines Notebooks, und/oder durch ein berührungs- oder annäherungsempfindliche Display, beispielsweise eines Smartphones oder Mobiltelefons, bereitgestellt wird.

Zweckmäßigerweise weist somit das Elektrogerät neben einem primären Sensorbereich, wie dem Touchpad eines Notebooks oder der Anzeigevorrichtung beziehungsweise dem Display eines Smartphones, einen sekundären Sensorbereich auf, welcher nicht identisch mit dem primären Sensorbereich ist und mit welchem insbesondere ein Druckeintrag messbar ist.

Der kapazitive Drucksensor des Sensorbereiches kann dabei Teil des Sensorbereiches selbst sein beziehungsweise in diesen integriert sein. Ferner ist es jedoch auch möglich, dass der kapazitive Drucksensor an den Sensorbereich angeordnet ist, sodass durch Drücken oder Krafteintrag auf den Sensorbereich dieser Druck oder diese Kraft auf den Drucksensor übertragen wird und somit der Drucksensor anspricht.

Bevorzugt ist vorgesehen, dass das Elektrogerät ein mobiles Elektrogerät, insbesondere ein Mobiltelefon oder ein Smartphone oder ein Laptop oder ein Notebook oder ein Tablet oder ein Personal Digital Assistant (PDA) ist, wobei der Sensorbereich bevorzugt auf einer Rückseite des Gehäuses angeordnet ist, und/oder wobei das Gehäuse bevorzugt einen Gehäusedeckel umfasst, wobei der Sensorbereich besonders bevorzugt an dem Gehäusedeckel angeordnet ist.

Vorteilhafterweise wird durch das Vorsehen eines Sensorbereiches auf der Rückseite eines Gehäuses eines Elektrogerätes oder an einem Gehäusedeckel eines Elektrogerätes zusätzliche Funktionalität für das Elektrogerät beigestellt, ohne zusätzlichen Bauraum zu benötigen. Ferner ist es vorteilhaft, dass durch das Vorsehen eines kapazitiven Drucksensors in dem Sensorbereich die Funktionalität nicht vom Material des Gehäuses abhängig ist. Das Gehäuse kann beispielsweise aus Metall oder Glas bestehen oder Metall oder Glas umfassen, weil bereits sehr kleine Durchbiegungen des Gehäuses gemessen werden können, sodass der Drucksensor schon bei kleinen Durchbiegungen ein Messsignal erzeugt, welches auf eine Benutzereingabe hinweist oder eine Benutzereingabe darstellt.

Weiter bevorzugt ist vorgesehen, dass der Sensorbereich keine Anzeigevorrichtung, insbesondere kein Display umfasst und/oder dass der Sensorbereich keine primäre annährungs- oder berührungsempfindliches Eingabevorrichtung, insbesondere kein primäres Touchpad ist. Die Hauptfunktionen des Elektrogerätes werden daher zweckmäßigerweise durch ein primäres Touchpad, beispielsweise eines Notebooks, beziehungsweise durch ein annäherungsempfindliches Display, beispielsweise eines Mobiltelefons oder eines Smartphones, gesteuert, welche jeweils einen primären Sensorbereich bereitstellen.

Durch die Verwendung eines sekundären Sensorbereiches für eine Benutzereingabe können Aufgaben zweckmäßig getrennt werden. Beispielsweise kann ein Smartphone-Benutzer durch Ausübung eines Drucks auf den Sensorbereich des Gehäuses des Elektrogerätes einen Anruf stummschalten, ohne das Display anschauen zu müssen.

Weiter bevorzugt ist vorgesehen, dass der kapazitive Drucksensor mindestens eine erste Elektrode und eine zweite Elektrode umfasst, wobei die Messung des Druckeintrages durch eine Messung der Änderung der kapazitiven Kopplung der ersten Elektrode und der zweiten Elektrode durchführbar ist, und/oder wobei die Messung des Druckeintrages durch eine Messung der elektrischen Kapazität zwischen der ersten Elektrode und der zweiten Elektrode durchführbar ist.

Durch die Messung der Änderung der kapazitiven Kopplung beziehungsweise durch die Messung der elektrischen Kapazität zwischen der ersten Elektrode und der zweiten Elektrode wird ein einfaches und genaues Messungsverfahren eines Druckeintrages bereitgestellt.

Ferner ist bevorzugt vorgesehen, dass der Drucksensor eine Koppelelektrode umfasst, welche bevorzugt ein leitfähiges Material aufweist und/oder elektrisch polarisierbar ist, wobei die Stärke der kapazitiven Kopplung der ersten Elektrode und der zweiten Elektrode von einem Abstand der Koppelelektrode von der ersten Elektrode und/oder der zweiten Elektrode abhängig ist.

Ferner ist bevorzugt vorgesehen, dass mehrere Drucksensoren vorgesehen sind, welche bevorzugt in Form eines oder einer, insbesondere rechtwinkligen, Rasters und/oder Arrays und/oder Matrix zur Messung eines Ortes und einer Stärke eines Druckeintrags angeordnet sind.

Durch einen Sensorbereich für eine Benutzereingabe, der mehrere Drucksensoren und insbesondere ein Raster, Array oder eine Matrix aus Drucksensoren aufweist, können neben der Stärke des Druckeintrages auch der Ort des Druckeintrages bestimmt werden. Das Drucksensorarray, das Raster oder die Matrix kann in den Sensorbereich integriert sein, sodass der Sensorbereich das Drucksensorarray umfasst, oder das Drucksensorarray kann am Sensorbereich angeordnet sein. Beispielsweise ist es möglich, dass ein kapazitives Drucksensorarray in einen Gehäusedeckel eines Elektrogerätes eingebracht wird. Durch die Durchbiegung des Gehäusedeckels in Folge eines extern eingebrachten Druckes ändert sich lokal die Kapazität beziehungsweise die kapazitive Kopplung eines oder mehrerer Drucksensoren, und es können sowohl der Ort als auch die Stärke des Druckeintrages gemessen werden. Je nach Anzahl der Drucksensoren im Array können so einfache Gesten, aber auch Eingaben mit hoher Genauigkeit, vergleichbar mit einem Touchpad, realisiert werden. Zweckmäßigerweise kann somit die Gehäuserückseite, beispielsweise eine Smartphone-Rückseite, als, insbesondere sekundäres, Touchpad verwendet werden. Dies ermöglicht zudem die Steuerung von Smart-TVs, Tablets, Notebooks etc. und der Sensorbereich kann als Mausersatz dienen.

Neben dem Ablehnen eines Anrufes bei einem Mobiltelefon oder Smartphone durch einfache Ausübung eines Druckes auf den Sensorbereich kann auch eine festgelegte Geste mit einem oder mit mehreren Fingern beziehungsweise ein Druck mit einem oder mit mehreren Fingern ausgeführt werden. Der Benutzer des Smartphones muss somit nicht auf das Display achten. Ferner kann durch die Festlegung einer bestimmten Geste, welche auf dem Sensorbereich des Gehäuses ausgeführt wird, verhindert werden, dass eine versehentliche Druckausübung zur Ablehnung eines Gespräches führt beziehungsweise dass versehentlich eine Benutzereingabe getätigt wird.

Besonders vorteilhaft ist, dass eine orts- und bevorzugt intensitätsaufgelöste Detektion eines Druckeintrags, zum Beispiel durch einen Finger, stattfindet. Es liegen somit nicht nur binäre Informationen vor, welche das Vorliegen oder das Nichtvorliegen einer Berührung betrifft, sondern es werden auch Informationen über die Position und bevorzugt über die Stärke des Druckes ermittelt. Insbesondere ermöglicht die Erfindung eine Detektion eines Druckeintrages auch durch andere Materialien hindurch, zum Beispiel wenn sich ein Elektrogerät wie ein Smartphone in einer Hosentasche befindet.

In einer weiter bevorzugten Ausführungsform ist vorgesehen, dass der mindestens eine Drucksensor, insbesondere die mehreren Drucksensoren und/oder das Raster und/oder das Array und/oder die Matrix aus Drucksensoren, ein Polymer aufweist.

Die Verwendung eines Polymers in einem oder mehreren Drucksensoren, einem Raster, einem Array oder einer Matrix aus Drucksensoren ist vorteilhaft, da sich derartige Drucksensoren oder Drucksensorraster oder Arrays oder Matrizen besonders gut eignen, in oder an einem Sensorbereich eines Gehäuses angeordnet zu werden.

Weiter bevorzugt ist vorgesehen, dass die Koppelelektrode eine Kunststofffolie umfasst.

Kunststofffolien sind einfach und vielfältig einsetzbar, und besonders geeignet für die Änderung beziehungsweise die Messung einer Änderung einer kapazitiven Kopplung zwischen einer ersten und einer zweiten Elektrode.

Ferner wird die der Erfindung zugrunde liegende Aufgabe durch Bereitstellung eines Drucksensorarrays geeignet für ein vorbeschriebenes Elektrogerät gelöst, umfassend ein Substrat, insbesondere eine Kunststofffolie und/oder eine Leiterplatte und/oder eine Glasplatte, und eine obere Schicht, wobei auf dem Substrat mindestens ein Drucksensor mit mindestens einer ersten Elektrode und einer zweiten Elektrode derart angeordnet ist, dass mindestens die erste Elektrode, bevorzugt beide Elektroden, des mindestens einen Drucksensors auf dem Substrat und zwischen dem Substrat und der oberen Schicht angeordnet ist oder sind, und/oder wobei die obere Schicht die zweite Elektrode und/oder eine Koppelelektrode umfasst.

Ein entsprechend ausgebildetes Drucksensorarray ist einfach und leicht herzustellen. Insbesondere muss lediglich ein Substrat wie eine Leiterplatte eine Elektrode aufweisen. Auf das Substrat, beispielsweise die Leiterplatte, wird dann eine geeignete Folie aufgebracht. Es ergibt sich so ein kostengünstiges Produkt für Consumer-Anwendungen.

Ist auf dem Substrat ein Drucksensor derart angeordnet, dass nur die erste Elektrode des Drucksensors auf dem Substrat und zwischen dem Substrat und der oberen Schicht angeordnet ist, während die obere Schicht die zweite Elektrode des Drucksensors aufweist, so ist der Drucksensor bevorzugt dazu ausgebildet, die Änderung der Kapazität zwischen der ersten und der zweiten Elektrode zu messen.

Sind hingegen die erste und die zweite Elektrode auf dem Substrat und zwischen dem Substrat und der oberen Schicht angeordnet, und ist ferner eine Koppelelektrode vorgesehen, so ist bevorzugt vorgesehen, dass die obere Schicht die Koppelelektrode umfasst, welche besonders bevorzugt nicht in elektrischem Kontakt mit der ersten und der zweiten Elektrode steht.

Weiter bevorzugt ist vorgesehen, dass eine Abstandsschicht zwischen Substrat und oberer Schicht angeordnet ist, wobei bevorzugt die Abstandsschicht und die obere Schicht einteilig miteinander ausgebildet sind, wobei besonders bevorzugt die, insbesondere einteilig mit der oberen Schicht ausgebildete, Abstandsschicht Vertiefungen oder Kavitäten zur Aufnahmen von mindestens der ersten Elektrode aufweist, und/oder wobei bevorzugt eine elektrische Kontaktierung zwischen der oberen Schicht und mindestens einer ersten Elektrode vorgesehen ist, wobei insbesondere bevorzugt die elektrische Kontaktierung durch die Abstandsschicht geführt ist.

Eine einteilige Ausbildung von Abstandsschicht und oberer Schicht bietet sich insbesondere dann an, wenn der Drucksensor zur Messung der Änderung der kapazitiven Kopplung einer ersten und einer zweiten Elektrode ausgebildet ist. In einem solchen Fall sind die erste und die zweite Elektrode des Drucksensors bevorzugt benachbart auf dem Substrat angeordnet. In einem geringen Abstand oberhalb der ersten und zweiten Elektroden ist eine obere Schicht angeordnet, welche eine Koppelelektrode umfasst oder aufweist. Die kapazitive Kopplung zwischen der ersten und der zweiten Elektrode erfolgt über die Koppelelektrode, beziehungsweise eine Änderung der kapazitiven Kopplung geschieht durch eine Abstandsänderung der Koppelelektrode von der ersten und/oder der zweiten Elektrode. Um die obere Schicht in einem geringen Abstand von der ersten und zweiten Elektrode zu positionieren, ist eine Abstandsschicht vorgesehen. Da die Koppelelektrode nicht elektrisch mit der ersten Elektrode und der zweiten Elektrode verbunden ist, können Abstandsschicht und obere Schicht einteilig ausgebildet sein, wobei darauf zu achten ist, dass die einteilig ausgebildete Abstandsschicht und obere Schicht elektrisch leitfähig oder zumindest polarisierbar sind.

Ist hingegen ein Drucksensor vorgesehen, mit dem die Kapazität zwischen einer ersten und einer zweiten Elektrode gemessen wird, so umfasst bevorzugt die obere Schicht die zweite Elektrode. Diese muss über eine Kapazitätsmesseinrichtung mit der ersten Elektrode verbunden werden. Dabei muss insbesondere bevorzugt eine elektrische Kontaktierung vorgesehen sein, welche die obere Schicht umfassend die zweite Elektrode mit der Kapazitätsmessvorrichtung verbindet. Hierbei wird insbesondere eine elektrische Kontaktierung, beispielsweise ein Leiterelement oder ein elektrisch leitfähiges Mittel, durch die Abstandsschicht geführt.

Eine weitere Lösung der Aufgabe wird durch Bereitstellung eines Gehäuses, insbesondere Gehäusedeckels, für ein Elektrogerät erhalten, wobei das Gehäuse einen Sensorbereich für eine Benutzereingabe umfasst, wobei der Sensorbereich einen kapazitiven Drucksensor zur Messung eines Druckeintrags umfasst und/oder wobei ein kapazitiver Drucksensor zur Messung eines Druckeintrags am Sensorbereich angeordnet ist, wobei bevorzugt ein vorbeschriebenes Drucksensorarray auf einer Innenseite des Gehäuses angeordnet ist.

### Kurze Beschreibung der Figuren

Zur Erläuterung der Erfindung zeigt
- Fig. 1: ein als Smartphone ausgebildetes Elektrogerät,
- Fig. 2: einen Gehäusedeckel mit einem Drucksensorarray,
- Fig. 3: eine erste Ausführungsform eines Drucksensorarrays, und
- Fig. 4: eine zweite Ausführungsform eines Drucksensorarrays.

### Ausführliche Beschreibung der Figuren

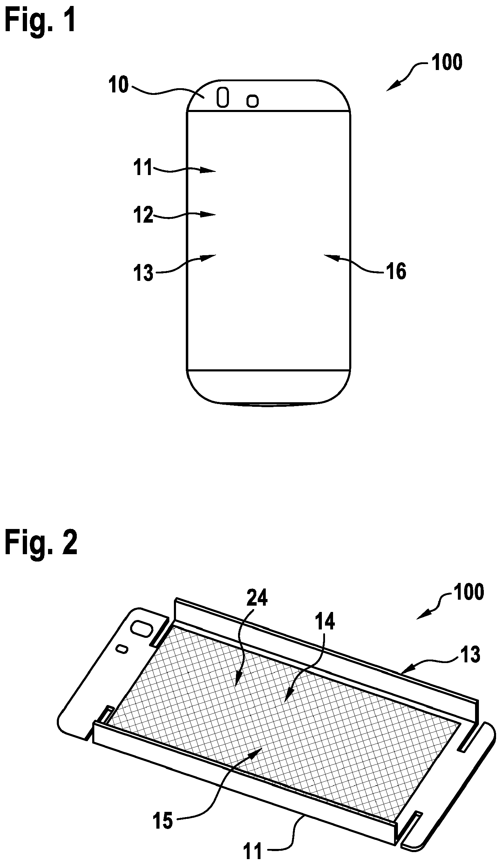

Fig. 1 zeigt ein Elektrogerät 100, in diesem Fall ein Smartphone 10. Das Smartphone 10 weist ein Gehäuse 11 auf, wobei in Fig. 1 die Rückseite 12 des Gehäuses 11 dargestellt ist. Die Rückseite 12 ist dabei Teil eines Gehäusedeckels 13.

Fig. 2 zeigt eine Innenseite 14 des Gehäusedeckels 13. Auf der Innenseite 14 des Gehäusedeckels 13 des Smartphones 10 ist ein Drucksensorarray 15 angeordnet beziehungsweise befestigt.

Durch Anordnung oder Befestigung des Drucksensorarrays 15 im Gehäusedeckel 13 wird auf der Rückseite 12 des Gehäusedeckels 13 des Smartphones 10 ein Sensorbereich 16 für eine Benutzereingabe bereitgestellt, wobei der Sensorbereich 16 einen kapazitiven Drucksensor 24 zur Messung eines Druckeintrages umfasst beziehungsweise wobei ein kapazitiver Drucksensor 24 zur Messung eines Druckeintrages am Sensorbereich 16 angeordnet ist.

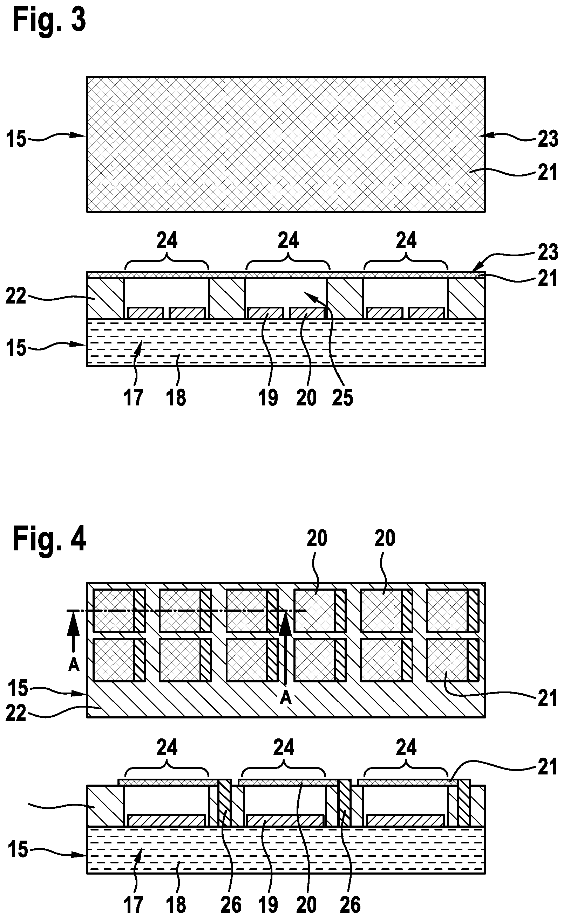

Fig. 3 zeigt eine erste Ausführungsform eines Drucksensorarrays 15 in einer Aufsicht und in einer seitlichen Querschnittsdarstellung.

Das Drucksensorarray 15 umfasst ein Substrat 17, welches als Leiterplatte 18 ausgebildet ist.

Auf dem Substrat 17 sind eine erste Elektrode 19 und eine zweite Elektrode 20 aufgedampft oder angeordnet oder aufgedruckt oder eingeätzt. Bei dem Substrat 17 kann es sich um ein starres oder flexibles Material handeln. Ferner können auf dem Substrat 17 Verdrahtungsebenen sowie eventuell Mikrocontroller angeordnet sein. Eine obere Schicht 21 ist in einem Abstand von der ersten Elektrode 19 und von der zweiten Elektrode 20 angeordnet. Zur Einhaltung des Abstandes ist eine Abstandsschicht 22 zwischen Substrat 17 und oberer Schicht 21 angeordnet. Die obere Schicht 21 oder Teilbereiche der oberen Schicht 21 sind dabei als Koppelelektrode 23 ausgebildet. In der Ausführungsform der Fig. 3 wird die kapazitive Kopplung zwischen der ersten Elektrode 19 und der zweiten Elektrode 20 gemessen. Dafür muss die Koppelelektrode 23 aus einem leitfähigen Material sein oder zumindest eine ausreichende Polarisierbarkeit besitzen. Bevorzugt wird hierfür eine Kunststofffolie verwendet, die kostengünstig auflaminiert oder aufgeklebt werden kann.

Die erste Elektrode 19, die zweite Elektrode 20, sowie die Koppelelektrode 23 bilden zusammen einen Drucksensor 24.

Da keine elektrische Kontaktierung der Koppelelektrode 23 mit einer Messvorrichtung und/oder der ersten Elektrode 19 oder der zweiten Elektrode 20 vorgesehen ist, kann die Koppelelektrode 23 auch einteilig oder einstückig mit der Abstandsschicht 22 ausgebildet sein. Die Herstellung kann für die in Fig. 3 gezeigte Ausführungsform in Leiterplattentechnik erfolgen. Dazu muss eine Metalllage, beispielsweise eine Metalllage auf einem Substrat 17 oder einer Leiterplatte 18, die erste Elektrode 19 und gegebenenfalls die zweite Elektrode 20 bereitstellen. Hierauf werden anschließend eine Abstandsschicht 22 und eine obere Schicht 21 laminiert oder, falls Abstandsschicht 22 und obere Schicht 21 einteilig ausgeführt sind, wird eine einteilige Schicht, umfassend Abstandsschicht 22 und oberer Schicht 21 auflaminiert. Sind die Abstandsschicht 22 und obere Schicht 21 einteilig ausgeführt, so kann diese einteilige Schicht Vertiefungen 25 oder Kavitäten enthalten. Die Abstandsschicht 22 und die obere Schicht 21 können bevorzugt aus dem gleichen Material bestehen und es bedarf hier keiner zusätzlichen Prozessschritte. Die kapazitive Kopplung hängt vom Abstand der Koppelelektrode 23 von der ersten Elektrode 19 und der zweiten Elektrode 20 und damit vom extern beaufschlagten Druck ab. Aufgrund der Anordnung in einem Raster können Ort und Stärke dieses Druckes gemessen werden.

Fig. 4 zeigt eine zweite Ausführungsform eines Drucksensorarrays 15. Bei dem in Fig. 4 dargestellten Drucksensorarray 15 wird als Messsignal die Kapazität zwischen einer ersten Elektrode 19 und einer zweiten Elektrode 20 gemessen. Die erste Elektrode 19 ist dabei wie in Ausführungsform 1 der Figur 3 auf eine Leiterplatte 18 oder ein Substrat 17 aufgedruckt, aufgeklebt, eingeätzt oder angeordnet. Auf dem Substrat 17 oder der Leiterplatte 18 ist eine Abstandsschicht 22 angeordnet, welche Aussparungen für die erste Elektrode 19 aufweist. Oberhalb der Abstandsschicht 22 ist eine obere Schicht 21 angeordnet, welche als zweite Elektrode 20 ausgebildet ist oder die zweite Elektrode 20 umfasst. Da die einzelnen zweiten Elektroden 20 der einzelnen Drucksensoren 24 des Drucksensorarrays 15 voneinander elektrisch isoliert sein müssen, ist die obere Schicht 21 segmentiert ausgebildet beziehungsweise besteht aus vielen einzelnen voneinander separaten Bereichen oder Segmenten.

Für die Ausführungsform der Fig. 4 muss durch die Abstandsschicht 22 eine elektrische Kontaktierung 26 geführt werden. Bei Integration der gesamten Anordnung in eine Leiterplatte 18 kann hier ein Vertical Interconnect Access (VIA) beziehungsweise eine Durchkontaktierung verwendet werden, welche diese Verbindung zur Verfügung stellt.

Für die in Fig. 4 dargestellte Ausführungsform muss die Abstandsschicht 22 zusätzlich die elektrische Kontaktierung 26 beinhalten. Auf die Abstandsschicht 22 wird dann eine zweite Folie als obere Schicht 21 laminiert, die die zweiten Elektroden 20 erhält.

Zurückkommend auf Fig. 2 muss eines der Drucksensorenarrays 15 nach den Ausgestaltungen der Fig. 3 und 4 lediglich auf die Innenseite 14 des Gehäusedeckels 13 des Smartphones 10 angebracht werden. Entweder wird ein Mikrocontroller auf das Substrat 17, insbesondere auf die Leiterplatte 18, aufgebracht, der die Signale auswertet, oder das Drucksensorarray 15 wird über ein Flexkabel mit vorhandener Elektronik im Smartphone 10 verbunden.

## Patentansprüche

1. Elektrogerät (100) mit einem Gehäuse (11) und einem Sensorbereich (16) für eine Benutzereingabe, wobei der Sensorbereich (16) einen kapazitiven Drucksensor (24) zur Messung eines Druckeintrags umfasst und/oder wobei ein kapazitiver Drucksensor (24) zur Messung eines Druckeintrags am Sensorbereich (16) angeordnet ist, **dadurch gekennzeichnet, dass** der Sensorbereich (16) an dem Gehäuse (11) angeordnet ist.

2. Elektrogerät (100) nach Anspruch 1, **dadurch gekennzeichnet, dass** das Elektrogerät ein mobiles Elektrogerät, insbesondere ein Mobiltelefon oder ein Smartphone (10) oder ein Laptop oder ein Notebook oder ein Tablet oder ein PDA ist, wobei der Sensorbereich (16) bevorzugt auf einer Rückseite (12) des Gehäuses (11) angeordnet ist, und/oder wobei das Gehäuse (11) bevorzugt einen Gehäusedeckel (13) umfasst, wobei der Sensorbereich (16) besonders bevorzugt an dem Gehäusedeckel (13) angeordnet ist.

3. Elektrogerät (100) nach einem der vorgenannten Ansprüche, **dadurch gekennzeichnet, dass** der Sensorbereich (16) keine Anzeigevorrichtung, insbesondere kein Display, und/oder keine primäre annährungs- oder berührungsempfindliches Eingabevorrichtung, insbesondere kein Touchpad, umfasst.

4. Elektrogerät (100) nach einem der vorgenannten Ansprüche, **dadurch gekennzeichnet, dass** der kapazitive Drucksensor (24) mindestens eine erste Elektrode (19) und eine zweite Elektrode (20) umfasst, wobei die Messung des Druckeintrags durch eine Messung der Änderung der kapazitiven Kopplung der ersten Elektrode (19) und der zweiten Elektrode (20) durchführbar ist, und/oder wobei die Messung des Druckeintrags durch eine Messung der elektrischen Kapazität zwischen der ersten Elektrode (19) und der zweiten Elektrode (20) durchführbar ist.

5. Elektrogerät (100) nach Anspruch 4, **dadurch gekennzeichnet, dass** der Drucksensor (24) eine Koppelelektrode (23) umfasst, welche bevorzugt ein leitfähiges Material aufweist und/oder elektrisch polarisierbar ist, wobei die Stärke der kapazitiven Kopplung der ersten Elektrode (19) und der zweiten Elektrode (20) von einem Abstand der Koppelelektrode (23) von der ersten Elektrode (19) und/oder der zweiten Elektrode (20) abhängig ist.

6. Elektrogerät (100) nach einem der vorgenannten Ansprüche, **dadurch gekennzeichnet, dass** mehrere Drucksensoren (24) am Sensorbereich (16) vorgesehen sind, welche bevorzugt in Form eines oder einer, insbesondere rechtwinkligen, Rasters und/oder Arrays und/oder Matrix zur Messung eines Ortes und einer Stärke eines Druckeintrags angeordnet sind.

7. Elektrogerät (100) nach einem der vorgenannten Ansprüche, **dadurch gekennzeichnet, dass** der mindestens eine Drucksensor (24), insbesondere die mehreren Drucksensoren (24) und/oder das Raster und/oder das Array und/oder die Matrix von Drucksensoren (24), ein Polymer aufweist.

8. Drucksensorarray (15) geeignet für ein Elektrogerät nach einem vorgenannten Ansprüche, umfassend ein Substrat (17), insbesondere Kunststofffolie und/oder eine Leiterplatte (18) und/oder eine Glasplatte, und eine obere Schicht (21), wobei auf dem Substrat (17) mindestens ein Drucksensor (24) mit mindestens einer ersten Elektrode (19) und einer zweiten Elektrode (20) derart angeordnet ist, dass mindestens die erste Elektrode (19), bevorzugt beide Elektroden, des mindestens einen Drucksensors (24) auf dem Substrat (17) und zwischen dem Substrat (17) und der oberen Schicht (21) angeordnet ist oder sind, und /oder wobei die obere Schicht (21) die zweite Elektrode (20) und/oder eine Koppelelektrode (23) umfasst.

9. Drucksensorarray (15) nach Anspruch 8, **dadurch gekennzeichnet, dass** eine Abstandsschicht (22) zwischen Substrat (17) und oberer Schicht (21) angeordnet ist, wobei bevorzugt die Abstandschicht (22) und die obere Schicht (21) einteilig miteinander ausgebildet sind, wobei besonders bevorzugt die, insbesondere einteilig mit der oberen Schicht ausgebildete, Abstandsschicht (22) Vertiefungen (25) oder Kavitäten zur Aufnahme von mindestens der ersten Elektrode (19) aufweist, und/oder wobei bevorzugt eine elektrische Kontaktierung (26) zwischen der oberen Schicht (21) und mindestens einer ersten Elektrode (19) ausgebildet ist, wobei insbesondere bevorzugt die elektrische Kontaktierung (26) durch die Abstandsschicht (22) geführt ist.

10. Gehäuse (11), insbesondere Gehäusedeckel (13), für ein Elektrogerät umfassend ein Sensorbereich (16) für eine Benutzereingabe, **dadurch gekennzeichnet, dass** der Sensorbereich (16) einen kapazitiven Drucksensor (24) zur Messung eines Druckeintrags umfasst und/oder dass ein kapazitiver Drucksensor (24) zur Messung eines Druckeintrags am Sensorbereich (16) angeordnet ist, wobei bevorzugt ein Drucksensorarray (15) nach einem der Ansprüche 8 oder 9 auf einer Innenseite (14) des Gehäuses (11) angeordnet ist.
